# EUROPEAN PATENT APPLICATION

(11) **EP 1 454 939 A1**
(43) Date of publication of application: **08.09.2004**
(21) Application number: 02778061.8
(22) Date of filing: 05.11.2002
(51) Int. Cl.: C08G 65/04

(54) **POLYETHER POLYMER AND PROCESS FOR PRODUCING THE SAME**

(30) Priority: 06.11.2001 JP 2001341155
(71) Applicant: Zeon Corporation, Tokyo 100-8323 (JP)
(72) Inventor: ONISHI, Hidenori, c/o ZEON CORPORATION, Tokyo 100-8323 (JP); NISHIO, Hideyuki, c/o ZEON CORPORATION, Tokyo 100-8323 (JP)
(74) Representative: Albrecht, Thomas, Dr.
(86) International application number: PCT/JP2002/011523
(87) International publication number: WO 2003/040210

(57) **Abstract**

A process for producing a polyether polymer by polymerizing a monomer having an oxirane group in the presence of a Lewis base having no active hydrogen such as, for example, a nitrile compound, a cyclic ether compound or an ester compound; and a polyether polymer produced by this process. Thus, a polyether polymer having a minimized amount of undesirable crosslinked product can be produced without reduction of polymerization activity.

## Description

### Technical Field

This invention relates to a process for producing a polyether polymer. More particularly it relates to an improvement in the process for producing a polyether polymer wherein a monomer having an oxirane group is polymerized using a polymerization catalyst.

### Background Art

A polyether polymer is heretofore known as having good ionic conductivity, and is used as rubber rolls for office automation instruments and antistatic agents for resins. Recently a polyether polymer is being examined for use as a solid polymer electrolyte. Solid polymer electrolytes have good processability and pliability, and therefore, batteries made thereof can have various shapes without restriction. Further, solid polymer electrolytes does not contain a liquid electrolyte and hence the batteries possess a high safety. Thus, expectations for the solid polymer electrolytes made of a polyether polymer are being raised.

Polyether polymers have heretofore been produced by polymerizing a monomer having an oxirane group using a polymerization catalyst by a solution polymerization procedure, a solvent slurry polymerization procedure or another polymerization procedure. As the polymerization catalyst, organic metal compounds such as, for example, organic aluminum compounds, organic zinc compounds and organic tin compounds, are used.

In the case when a polyether polymer is used as a solid electrolyte, a filmy solid electrolyte is generally made by a procedure wherein a polyether polymer having a crosslink-forming reactive functional group is formed into a film, and the film is cured with a radical initiator such as an organic peroxide, or with active radiation whereby a crosslink is formed.

The polyether polymer having a crosslink-forming reactive functional group is produced by using a crosslink-forming monomer. Therefore, a problem arises such that crosslinking tends to occur to some extent at the step of producing the polymer having a crosslink-forming reactive functional group. When a solid polymer electrolyte film is formed from a polymer containing a large amount of crosslinked products, the polymer has poor processability and the resulting electrolyte film has poor uniformity with the results that performance and safety of batteries are deteriorated.

An attempt has been made wherein a polymerization catalyst prepared by reaction of triisobutylaluminum with an organic acid salt of diazabicycloundecene and with phosphoric acid, is used for polymerization (Japanese Examined Patent Publication No. S56-51171). According to this attempt, a polymer having a relatively small amount of crosslinked products can be obtained, but, the content of crosslinked products in the polymer tends to vary depending upon the particular polymerization conditions including an amount of impurities in a polymerization system. Thus, a method of producing a polyether polymer having a greatly reduced content of crosslinked products is eagerly desired.

### Disclosure of the Invention

In view of the foregoing, an object of the invention is to provide a process for producing a polyether polymer having a minimized content of undesirable crosslinked products without reduction of polymerization activity.

To achieve the above-mentioned object, the present inventors have made extensive researches and found that the undesirable formation of crosslinked products at the step of polymerization can be minimized without reduction of polymerization activity by conducting the polymerization of an oxirane monomer in the presence of a Lewis base having no active hydrogen. The present invention has been completed on the basis of this finding.

Thus, in accordance with the present invention, there is provided a process for producing a polyether polymer characterized by polymerizing a monomer having an oxirane group in the presence of a Lewis base having no active hydrogen.

The Lewis base having no active hydrogen is preferably a nitrile compound, a cyclic ether compound, or an ester compounds. The monomer having an oxirane group preferably comprise 0.1 to 20% by mole, based on the monomer, of an ethylenically unsaturated epoxide. The polymerization is preferably carried out using a polymerization catalyst comprising an organic aluminum compound.

### Best Mode for Carrying Out the Invention

The present invention is drawn to a process for producing a polyether polymer characterized by polymerizing a monomer having an oxirane group (which monomer is hereinafter referred to as "oxirane monomer" when appropriate) in the presence of a Lewis base having no active hydrogen. By the term "oxirane group" as used herein, we mean a monovalent or divalent group represented by the following chemical formula [1] or [2]. These groups may be positioned either at a molecule terminal or at a middle of molecular chain. In the process of the present invention, a compound having an oxirane group, which is referred to as "a monomer having an oxirane group" or "an oxirane monomer", is used as a starting monomer, and a polyether polymer produced by the process of the present invention is a polymer formed by a ring-opening polymerization, i.e., by ring-opening of the oxirane group of an oxirane monomer, and polymerization of the ring-opened oxirane monomer.

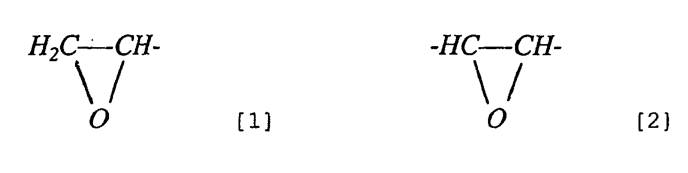

The oxirane monomer used as a starting monomer in the production process of the present invention includes ethylene oxide, propylene oxide, and compounds having an oxirane group at a molecule terminal, namely, compounds having a group represented by the formula [1] (which is referred to as "1,2-epoxyethyl group") and compounds having a glycidyl group (i.e., 2,3-epoxypropyl group); and compounds having a group represented by the formula [2] in the molecule. The compounds having a group of formula [2] are preferably carbocyclic compounds and heterocyclic compounds, which have a group of formula [2] within the carbocyclic or heterocyclic structure.

The oxirane monomer used in the production process of the present invention preferably comprises an oxirane monomer having a crosslink-forming functional group (which monomer is hereinafter referred to as "crosslink-forming oxirane monomer"). Even when an oxirane monomer having a crosslink-forming functional group is used in the production process of the present invention, formation of undesirable crosslinked products in a polymer can be avoided or minimized. This is in contrast to the conventional polymerization process using an oxirane monomer having a crosslink-forming functional group wherein undesirable crosslinked products are formed in a polymer.

The crosslink-forming oxirane monomer includes oxyrane monomers having an ethylenically unsaturated group (which monomers are hereinafter referred to as "ethylenically unsaturated epoxide" when appropriate) and oxirane monomers having a halogen substituent.

As specific examples of the ethylenically unsaturated epoxide, there can be mentioned ethylenically unsaturated glycydyl ethers such as vinyl glycidyl ether, allyl glycidyl ether, butenyl glycidyl ether and o-allylphenyl glycidyl ether; alkenyl epoxides (that is, monomers having an alkenyl group and a group represented by the formula [1]) such as 4,5-epoxy-2-pentene, 3,4-epoxy-1-butene, 1,2-epoxy-5-hexene and 1,2-epoxy-9-decene; monomers having a group of the formula [2] in an unsaturated alicyclic structure such as 3,4-epoxy-1-vinylcyclohexene and 1,2-epoxy-5,9-cyclododecadiene; glycidyl esters of ethylenically unsaturated carboxylic acids such as glycidyl acrylate, glycidyl methacrylate, glycidyl crotonate, glycidyl crotonate, glycidyl 4-heptenoate, glycidyl sorbate, glycidyl linolate, glycidyl 4-methyl-3-pentenoate, glycidyl 3-cyclohexenecarboxylate and glycidyl 4-methyl-3-cyclohexenecarboxylate; and ethylenically unsaturated epoxides having a halogen substituent such as chloroprene monoepoxide.

The monomer having a halogen substituent is a monomer having a structure such that a part or the entirety of the hydrogen atoms of an oxirane monomer have been substituted by a halogen atom. As specific examples of such monomer, there can be mentioned epihalohydrins such as epichlorohydrin, epibromohydrin, epiiodohydrin, epifluorohydrin and 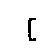 -methylepichlorohydrin; and p-chlorostyreneoxide and dibromophenyl glycidyl ether.

The above-mentioned crosslink-forming oxirane monomer may be used in combination with other oxirane monomers (hereinafter referred to as "non-crosslink-forming oxirane monomer" when appropriate). As specific examples of the non-crosslink-forming oxirane monomer, there can be mentioned alkylene oxides such as ethylene oxide, propylene oxide, 1,2-epoxybutane, 1,2-epoxyoctane, 1,2-epoxydecane, 1,2-epoxytetradecane, 1,2-epoxyhexadecane, 1,2-epoxyoctadecane and 1,2-epoxyeicosane; alkyl glycidyl ethers such as methyl glycidyl ether, ethyl glycidyl ether and butyl glycidyl ether; and aryl epoxides such as styrene oxide and phenyl glycidyl ether.

Each of the crosslink-forming monomer and the non-crosslink-forming monomer may be used either alone or as a combination of at least two thereof. In the case when an ethylenically unsaturated epoxide is used as the crosslink-forming oxirane monomer, its amount used is preferably in the range of 0.1 to 20% by mole, more preferably 1 to 15% by mole and especially preferably 2 to 13% by mole, based on the total oxirane monomers. In the case when an oxyrane monomer having a halogen substituent is used as the crosslink-forming oxirane monomer, its amount used is preferably in the range of 5 to 95% by mole, more preferably 8 to 80% by mole and especially preferably 30 to 70% by mole, based on the total oxirane monomers. The remainder of the total oxirane monomers, other than the crosslink-forming oxirane monomer, is the amount of a non-crosslink-forming oxirane monomer.

An ethylenically unsaturated epoxide is especially preferable as the crosslink-forming oxirane monomer used in the present invention.

A Lewis base having no active hydrogen is used as an essential ingredient in the present invention. As specific examples of the Lewis base having no active hydrogen, there can be mentioned nitrile compounds such as acetonitrile and benzonitrile; cyclic ether compounds such as tetrahydrofuran and dioxane; isocyanate compounds such as phenyl isocyanate; ester compounds such as methyl acetate, ethyl acetate, butyl acetate, methyl propionate and ethyl propionate; alkali metal alkoxides such as potassium t-amyloxide and potassium t-butyloxide; phosphine compounds such as triphenylphosphine; and sulfoxides such as diemthyl sulfoxide. Of these, nitrile compounds, cyclic ether compounds and ester compounds are preferable. More specifically, acetonitrile, tetrahydrofuran, dioxane and ethyl acetate are more preferable. Acetonitrile is especially preferable.

The Lewis base may be used either alone or as a combination of at least two thereof. The amount of the Lewis base is usually in the range of 0.01 to 20% by weight, preferably 0.05 to 10% by weight and more preferably 0.1 to 5% by weight, based on the total oxirane monomers.

A polymerization catalyst is usually used in the process of the present invention. The polymerization catalyst is not particularly limited provided that it is capable of exhibiting a catalytic activity for polymerization of oxirane monomers. The polymerization catalyst includes, for example, organic aluminum compound-containing polymerization catalysts such as a polymerization catalyst prepared by reacting an organic aluminum compound with water and with acetyl acetone (Japanese Examined Patent Publication [hereinafter abbreviated to as "JP-B"] No. S35-15797), a polymerization catalyst prepared by reacting triisobutylaluminum with phosphoric acid and with triethylamine (JP-B S46-27534), a polymerization catalyst prepared by reacting triisobutylaluminum with an organic acid salt of diazabicyloundecene and with phosphoric acid (JP-B S56-51171), and a polymerization catalyst comprised of a partially hydrolyzed product of an aluminum alkoxide, and an organic zinc compound (JP-B S43-2945); organic zinc compound-containing polymerization catalysts such as the above-mentioned polymerization catalyst comprised of a partially hydrolyzed product of an aluminum alkoxide, and an organic zinc compound, a polymerization catalyst comprised of an organic zinc compound and a polyhydric alcohol (JP-B S45-7751), and a polymerization catalyst comprised of a dialkylzinc and water (JP-B S36-3394); and organic tin compound-containing polymerization catalysts such as a polymerization catalyst comprised of an organic tin compound and a phosphoric acid ester compound (JP-B S46-41378).

Of these, organic aluminum compound-containing polymerization catalysts are preferable. A polymerization catalyst prepared by reacting triisobutylaluminum with phosphoric acid and with triethylamine is especially preferable. By using this polymerization catalyst, the formation of undesirable crosslinked products in a polymer can be markedly suppressed.

The polymerization catalyst can be prepared by a known procedure. For example, the catalyst can be prepared by dissolving or dispersing the required ingredients in a solvent such as a hydrocarbon including n-hexane, cyclohexane or toluene, a chain-like ether including dethyl ether, or a mixture thereof, and mixing together the dissolved or dispersed ingredients. The order in which the required ingredients are added for the preparation of the catalyst are not particularly limited.

In the production process of the present invention, a solution polymerization procedure or a solvent slurry polymerization procedure is adopted for polymerization of the oxirane monomers. As specific examples of the solvent used for polymerization, there can be mentioned aromatic hydrocarbons such as benzene and toluene; chain-like saturated hydrocarbons such as n-pentane and n-hexane; and alicyclic hydrocarbons such as cyclopentane and cyclohexane. The amount of the solvent is not particularly limited, but is preferably such that the monomer concentration is in the range of 1 to 50% by weight, more preferably 10 to 30% by weight.

Among the polymerization procedures, a solvent slurry polymerization procedure is preferably adopted. In this polymerization procedure, chain-like saturated hydrocarbons such as n-pentane and n-hexane, and alicyclic hydrocarbons such as cyclopentane are preferable as the solvent.

The polymerization may be carried out by a batchwise procedure wherein the preparation of a catalyst and the polymerization of monomers are conducted in a single polymerization vessel, or by a continuous procedure wherein a catalyst prepared in a reactor and monomers are continuously fed into a polymerization vessel. Alternatively, a semi-batchwise procedure can be adopted wherein a catalyst prepared in a reactor is placed in a polymerization vessel and the polymerization is conducted while monomers are introduced in the polymerization vessel. The addition of monomers may be conducted in one time or dividedly. The polymerization temperature is usually in the range of 0 to 100°C, preferably 30 to 70°C, and the polymerization pressure is usually in the range of 0.1 to 2 MPa.

In the case when a solvent slurry polymerization procedure is adopted, a catalyst used is preferably pre-treated with a monomer giving a polymer insoluble in a solvent used, and with a monomer giving a polymer soluble in the solvent used, because good stability of polymerization system can be obtained. The pre-treatment of the catalyst is carried out by mixing the catalyst with small amounts of monomers, and aging the mixture at a temperature of 0 to 100°C, preferably 30 to 50°C, for 10 to 30 minutes. By using the thus-aged catalyst, undesirable deposition of a polymer on an inner wall of reactor can be avoided.

The time at which the Lewis base is added and the procedure by which the Lewis base is added are not particularly limited. For example, the Lewis acid can be incorporated previously in any of the ingredients used for the preparation of a catalyst, or incorporated in the catalyst after the preparation thereof. In the case when the catalyst is pre-treated with monomers as mentioned above, the Lewis base can be added to the catalyst after the pre-treatment. The Lewis base is preferably added in a polymerization system during polymerization reaction because undesirable crosslinking occurring during polymerization can be more markedly suppressed. The addition of Lewis base during the polymerization reaction can be made at one time or in lots, or in a continuous manner by previously incorporating the Lewis base in a polymerization catalyst or monomers.

The shape and material of the polymerization vessel and the stirrer equipped in the polymerization vessel are not particularly limited and any desired shape and material can be used. For example, as the stirrer, those which are widely used for slurry polymerization such as Faudler stirrer, maxblend stirrer and fullzone stirrer, and those which are of special shape such as helical ribbon stirrer, pitched paddle stirrer, marine stirrer and blue margin stirrer, are mentioned. The stirrers may be provided with baffles.

In the case when the catalyst is pre-treated with a monomer giving a polymer insoluble in a solvent used, and with a monomer giving a polymer soluble in the solvent used, stirrers exhibiting a strong shear, such as Faudler stirrer, maxblend stirrer and blue margin stirrer, are preferably used.

After completion of polymerization reaction, a polymerization stopper such as water and an alcohol, or an antioxidant can be added to the polymerization mixture, and the polymer is separated, washed and dried by a conventional procedure to give a target polyether polymer.

The invention will now be described more specifically by the following examples and comparative examples, that by no means limit the scope of the invention.

In these examples and comparative examples, solvents and monomers were used after they were subjected to deaerating and dehydration treatments; and all of the operations were carried out under dehydrated conditions in an inert gas atmosphere.

Parts and % in the examples and comparative examples are by weight unless otherwise specified.

Characteristics were determined by the following methods.

### (1) Toluene-insoluble content

0.2 g of an obtained polyether polymer and 100 ml of toluene were placed in a 200 ml Erlenmeyer flask, and the mixture was shaken at 40°C for 3 hours to completely dissolve the soluble ingredient. Then the thus-obtained solution was filtered through a 150 mesh wire gauze to remove the toluene-soluble ingredient. The insolubles on the wire gauze were dried and weighed. The toluene-insoluble content (% by weight) was determined as the ratio of the weight of dried insoluble ingredients to the weight (0.2 g) of polymer as measured before dissolution of the soluble ingredient. The smaller the toluene-insoluble content, the smaller the amount of crosslinked products in the polyether polymer.

### (2) Processability (Garvey die extrusion test)

Processability of a polymer was evaluated according to ASTM D-2230-77 wherein the polymer was extruded through a Garvey die to determine die swell (%). The smaller the die swell, the better the processability.

### Example 1

An autoclave equipped with a stirrer was dried and flushed with nitrogen gas, and then, charged with 158.7 parts of triisobutylaluminum, 1,170 parts of toluene and 296.4 parts of diethyl ether. The inside temperature was set at 30°C, and 23. 5 parts of phosphoric acid was added at a constant rate over a period of 10 minutes while being stirred. Then, 12.1 parts of triethylamine was added, and the mixture was maintained at 60°C for 2 hours to give a catalyst solution.

Another autoclave equipped with a stirrer was dried and flushed with nitrogen gas, and then, charged with 2,100 parts of n-hexane and 73.1 parts of the above-mentioned catalyst solution. The inside temperature was set at 30°C, and 4 parts of ethylene oxide as a non-crosslink-forming oxirane monomer was added while being stirred, to carry out a reaction. Then, 8.5 parts of an equal weight monomer mixture of ethylene oxide and propylene oxide as a non-crosslink-forming oxirane monomer was added to carry out a polymerization for producing a seed.

The inside temperature was set at 60°C, and then, a mixed solution of 340 parts (90% by mole) of ethylene oxide as a non-crosslink-forming oxirane monomer, 14.9 parts (3% by mole) of propylene oxide as a non-crosslink-forming oxirane monomer, 68.4 parts (7% by mole) of allyl glycidyl ether as a crosslink-forming oxirane monomer, 1.3 parts (0.3% based on the total oxirane monomers) of acetonitrile as a Lewis base having no active hydrogen, and 300 parts of n-hexane as a solvent was continuously added to the seed-containing polymerization liquid at a constant rate over a period of 5 hours. After completion of addition, a polymerization was carried out for 2 hours. The polymerization conversion was 99%. To the resultant polymer slurry, 42.4 parts of a 5% solution in toluene of 4,4'-thiobis- (6-tert-butyl-3-methylphenol) as an antioxidant was added with stirring. The mixture was vacuum-dried at 40°C to give a powdery polymer. The composition, toluene-insoluble content and die swell of the thus-obtained polyether polymer were evaluated. The results are shown in Table 1.

**Table 1**

| | *Ex. 1* | *Ex. 2* | *Ex. 3* | *Ex. 4* | *Ex. 5* | *Ex. 6* | *Co. Ex. 1* | *Co. Ex. 2* |
|---|---|---|---|---|---|---|---|---|
| *Amount of Lewis base added (%)* | | | | | | | | |
| *Acetonitrile *1* | *0.3* | *3.0* | | | | *3.0* | - | |
| *THF *1* | | | *0.3* | *3.0* | | | - | |
| *Ethyl acetate *1* | | | | | *0.3* | | - | |
| *Methanol *2* | | | | | | | - | *0.3* |
| *Composition of polymer (mole %)* | | | | | | | | |
| *EO units* | *90* | *89.2* | *90* | *90.1* | *90* | *81.7* | *89* | *90.2* |
| *PO units* | 3.8 | 3.5 | *3.2* | *3.3* | *3.3* | *14.6* | *3.5* | *3.8* |
| *AGE units* | *6.2* | *7.3* | *6.8* | *6.6* | *6.7* | *3.7* | *7.5* | *6* |
| *Polymerization conversion (%)* | *99* | *100* | *98* | *98* | *99* | *98* | *98* | *65* |
| *Toluene* | | | | | | | | |
| *insoluble (%)* | *0.7* | *1* | *2.2* | *0.8* | *1.7* | *0.5* | *15* | *2* |
| *Die swell* (%) | *2.5* | *2.3* | *2.6* | *3* | *3* | *4.2* | *12.5* | *2.3* |

| | | | | | | | | |
|---|---|---|---|---|---|---|---|---|
| ** 1 Having no active hydrogen* | | | | | | | | |
| ** 2 Having active hydrogen* ** EO: Ethylene oxide, PO: Propylene oxide, AGE: Allyl glycidyl ether* | | | | | | | | |

### Example 2

Polymerization was carried out by the same procedures as described in Example 1 wherein the amount of acetonitrile was changed to 12.7 parts (3% based on the total oxirane monomers) with all other conditions remaining the same. The polymerization conversion was about 100%. A powdery polyether polymer was obtained from the polymer slurry as-obtained by polymerization, by a procedure similar to that in Example 1. The composition and properties of the polyether polymer are shown in Table 1.

### Example 3

Polymerization was carried out by the same procedures as described in Example 1 wherein 1.3 parts of tetrahydrofuran (THF) was added as a Lewis base having no active hydrogen instead of acetonitrile with all other conditions remaining the same. The polymerization conversion was 98%. A powdery polyether polymer was obtained from the polymer slurry as-obtained by polymerization, by a procedure similar to that in Example 1. The composition and properties of the polyether polymer are shown in Table 1.

### Example 4

Polymerization was carried out by the same procedures as described in Example 3 wherein the amount of THF was changed to 12.7 parts with all other conditions remaining the same. The polymerization conversion was 98%. A powdery polyether polymer was obtained from the polymer slurry as-obtained by polymerization, by a procedure similar to that in Example 1. The composition and properties of the polyether polymer are shown in Table 1.

### Example 5

Polymerization was carried out by the same procedures as described in Example 1 wherein 1.3 parts of ethyl acetate was added as a Lewis base having no active hydrogen instead of acetonitrile with all other conditions remaining the same. The polymerization conversion was 99%. A powdery polyether polymer was obtained from the polymer slurry as-obtained by polymerization, by a procedure similar to that in Example 1. The composition and properties of the polyether polymer are shown in Table 1.

### Example 6

Polymerization was carried out by the same procedures as described in Example 2 wherein the amounts of monomers were changed as follows with all other conditions remaining the same.
Ethylene oxide: 302 parts (80% by mole)
Propylene oxide: 74.5 parts (15% by mole)
Allyl glycidyl ether: 48.9 parts (5% by mole)
The polymerization conversion was 98%. A powdery polyether polymer was obtained from the polymer slurry as-obtained by polymerization, by a procedure similar to that in Example 1. The composition and properties of the polyether polymer are shown in Table 1.

### Comparative Example 1

Polymerization was carried out by the same procedures as described in Example 1 wherein acetonitrile as a Lewis base having no active hydrogen was not added with all other conditions remaining the same. The polymerization conversion was 98%. A powdery polyether polymer was obtained from the polymer slurry as-obtained by polymerization, by a procedure similar to that in Example 1. The composition and properties of the polyether polymer are shown in Table 1.

### Comparative Example 2

Polymerization was carried out by the same procedures as described in Example 1 wherein 1.3 parts (0.3% based on the total oxirane monomer) of methanol (which was a Lewis base having active hydrogen) was added instead of acetonitrile with all other conditions remaining the same. The polymerization conversion was 65%. A powdery polyether polymer was obtained from the polymer slurry as-obtained by polymerization, by a procedure similar to that in Example 1. The composition and properties of the polyether polymer are shown in Table 1.

As seen from Table 1, in the case when the polymerization of oxirane monomers was carried out in the presence of a Lewis base having no active hydrogen (i.e., acetonitrile, THF or ethyl acetate), polyether polymers having a small toluene-insoluble content were obtained. These polyether polymers exhibited a small die swell and thus had good processability and capability (Examples 1 to 6).

In contrast, in the case when a Lewis base was not added, the resulting polyether polymer had a large toluene-insoluble content, and exhibited a large die swell and had poor processability and shapability (Comparative Example 1). In the case when methanol, i.e., a Lewis base having active hydrogen, was added, the resulting polyether polymer had a small toluene-insoluble content, but, the polymerization conversion was low and thus the polymerization activity was reduced (Comparative Example 2).

### Industrial Applicability

According to the production process of the present invention, formation of undesirable crosslinked products occurring during polymerization can be remarkably suppressed without reduction of polymerization activity.

The resulting polyether polymer contains only a minimized amount of crosslinked products and exhibits good processability and shapability, and thus, a shaped article having a smooth surface can easily obtained from the polyether polymer. In view of these beneficial properties, the polyether polymer produced by the process of the present invention is suitable for ionic conductive materials such as a solid electrolyte; rubber rolls such as a textile fiber-spinning rubber roll and a rubber roll for office automation instrument; and sealing materials such as a waterproof seal and a packing.

## Claims

1. A process for producing a polyether polymer **characterized by** polymerizing a monomer having an oxirane group in the presence of a Lewis base having no active hydrogen.

2. The production process according to claim 1, wherein the Lewis base having no active hydrogen is at least one compound selected from the group consisting of nitrile compounds, cyclic ether compounds, and ester compounds.

3. The production process according to claim 1, wherein the monomer having an oxirane group comprises 0.1 to 20% by mole, based on the monomer having an oxirane group, of an ethylenically unsaturated epoxide.

4. The production process according to claim 1, wherein the polymerization is carried out using a catalyst comprising an organic aluminum compound as a polymerization catalyst.

5. The production process according to claim 1, wherein the polymerization is carried out by a solvent slurry polymerization procedure.

6. A polyether polymer produced by the production process as claimed in claim 1.
